# EUROPÄISCHE PATENTSCHRIFT

(11) **EP 2 435 852 B1**
(45) Veröffentlichungstag und Bekanntmachung des Hinweises auf die Patenterteilung: **08.07.2015**
(21) Anmeldenummer: 10712730.0
(22) Anmeldetag: 25.03.2010
(51) Int. Cl.: G01S 17/00, G02B 26/08, G02B 23/10

(54) **ZIELOPTIKVORRICHTUNG**
OBJECTIVE DEVICE
SYSTÈME OPTIQUE DE VISÉE

(30) Priorität: 25.05.2009 DE 102009026434
(43) Veröffentlichungstag der Anmeldung: 04.04.2012
(73) Patentinhaber: Robert Bosch GmbH, 70442 Stuttgart (DE)
(72) Erfinder: HAASE, Bjoern, 70184 Stuttgart (DE); BABKINA, Tatiana, 72072 Tuebingen (DE)
(86) Internationale Anmeldenummer: PCT/EP2010/053892
(87) Internationale Veröffentlichungsnummer: WO 2010/136233

(56) Entgegenhaltungen:
- EP-A1- 0 562 941
- WO-A1-2006/132060
- DE-A1- 10 151 701
- DE-A1- 19 520 167
- JP-A- 2008 089 393
- US-A- 4 326 799

## Beschreibung

### Stand der Technik

Die Erfindung geht aus von einer Zieloptikvorrichtung nach dem Oberbegriff des Anspruchs 1.

Es ist bereits eine Zieloptikvorrichtung für ein Laserentfernungsmessgerät bekannt, die zu einem Anvisieren eines Messobjekts vorgesehen ist und die eine Referenzmarkierung und eine Justiereinheit mit zumindest einem Lagermittel aufweist.

### Neue Beschreibungsseite 1a

Die US 4,326,799 A offenbart ein scannendes Lasersystem mit einem aktiven und einem passiven Detektor. Dabei dient der aktive Detektor der Messung der von der Vorrichtung ausgesandten und an einem Messobjekt reflektierten Messstrahlung. Der passive Detektor der US 4,326,799 A dient der Messung einer vom dem Target emittierten Strahlung. Das Scann-System der US4,326,799A, weist ein stellbares, insbesondere um die optische Achse des Systems rotierbares Prisma in seinem ausgangsseitigen Messstrahl auf. Mittels dieses Prismas wird der Messstrahl des Lasersystems über einen Untersuchungsgegenstand gescannt. Über die Justage, insbesondere das Verkippen des Prismas um eine horizontale Achse wird in der Vorrichtung der US 4,326,799 A zudem auch der rücklaufende Signalstrahl auf einen Referenzstrahl bzw. die Referenzrichtung des aktiven Detektors der Vorrichtung justiert. Eine Dejustierung des Referenzstrahles relativ zum rücklaufenden Messstrahl würde zu einer Verfälschung des Ausgangssignals des aktiven Detektors und somit zu einer Fehlmessung der Vorrichtung führen.

Die JP 2008 089393 A offenbart eine scannende optische Vorrichtung, bei der ein Messstrahl über eine Prismenanordnung bestehend aus zwei Prismen abgelenkt wird. Bei der Vorrichtung der JP 2008 089393 A passiert ein Referenzstrahl die Prismenanordnung durch eine Öffnung in der Prismenanordnung ungestört Durch Verdrehen der Prismen gegeneinander kann der Messstrahl abgelenkt und über ein Zielobjekt hinweg gescannt werden, um Entfernungsmesswerte aufzunehmen.

### Offenbarung der Erfindung

Die Erfindung geht aus von einer Zieloptikvorrichtung, insbesondere für ein Laserentfernungsmessgerät, die zu einem Anvisieren eines Mossobjokts vorgesehen ist und die eine Referenzmarkierung und eine Justiereinheit mit zumindest einem Lagermittel aufweist.

Es wird vorgeschlagen, dass die Justiereinheit zumindest ein erstes Prisma und ein zweites Prisma aufweist, das mittels des Lagermittels zu einerJustierung einer Abbildung des Messobjekts mit der Referenzmarkierung bewegbar gelagert sind. In diesem Zusammenhang soll unter "vorgesehen" insbesondere speziell ausgestattet und/oder speziell ausgelegt verstanden werden. Des Weiteren soll unter einer "Zieloptikvorrichtung" eine Vorrichtung und/oder Einheit verstanden werden, die zu einer Justage des Messgeräts, insbesondere des Laserentfernungsmessgeräts, bezüglich eines Messobjekts, wie beispielsweise einer Wand, vorgesehen ist und/oder die ein Anvisieren des Messobjekts vor einem Messvorgang mittels des Messgeräts durch den Bediener ermöglicht. Unter einem "Messobjekt" soll insbesondere ein Objekt verstanden werden, das eine zu messende Entfernung bezüglich des Laserentfernungsmessgeräts markiert, wie beispielsweise eine Wandoberfläche. Vorzugsweise ist die Referenzmarkierung von einer internen Bezugsmarke gebildet, wie beispielsweise von einem in der Zieloptikvorrichtung angeordneten Fadenkreuz. Besonders vorteilhaft jedoch ist die Referenzmarkierung als von einer Abbildung einer von einem Strahlenbündel gebildeten Referenzstrahlung ausgebildet, wie insbesondere als ein sichtbares, insbesondere farbiges Laserstrahlenbündel eines Lasers des Laserentfernungsmessgeräts oder als eine mittels einer sichtbaren bzw. farbigen LED erzeugten Referenzmarkierung, die im Betrieb für einen Bediener als farbiger Laserspot oder Lichtspot sichtbar ist. Unter einer "Abbildung des Messobjekts" soll hierbei insbesondere ein in der Zieloptik erzeugtes Bild und/oder Teilbild des Messobjekts verstanden werden. Ferner soll unter einer "Justierung" insbesondere ein exaktes Einstellen und/oder ein Abgleichen einer Messgröße und/oder eine Anzeige des Laserentfernungsmessgeräts, wie insbesondere eine Minimierung eines Abstands des Abbilds des Messobjekts mit der Referenzmarkierung inner-halb der Zieloptikvorrichtung, verstanden werden, um systematische Messabweichungen während eines Messbetriebs zumindest teilweise zu beseitigen. Vorzugsweise werden bei der Justierung Parameter der Zieloptikvorrichtung verschoben, bis die Referenzmarkierung, insbesondere ein Abbild der Referenzstrahlung, und das Abbild des Messobjekts sich zumindest teilweise überschneiden und besonders vorteilhaft übereinander liegen. Die Justierung erfolgt insbesondere während einer Produktion des Laserentfernungsmessgeräts, so dass nach einer erfolgreichen Justierung alle für die Justierung bewegbaren Bauteile der Justiereinheit, insbesondere das Prisma, vorzugsweise fixiert werden und/oder das Lagermittel blockiert wird, so dass in einem Messbetrieb eine unerwünschte Bewegung des Prismas aus seiner justierten Position heraus vorteilhaft verhindert werden kann. Das Lagermittel kann von einem mechanischen Lagermittel gebildet sein und/oder von einem weiteren, dem Fachmann als sinnvoll erscheinenden Lagermittel. Vorteilhafterweise ist das Prisma zu einer Brechung von Lichtstrahlung vorgesehen, wobei eine Brechungseigenschaft, insbesondere eine Brechzahl des Prismas von einer Form und insbesondere von einem Material des Prismas abhängt. Das Prisma kann aus Glas gebildet sein oder besonders vorteilhaft von transparenten und unpolaren Thermoplasten, wie beispielsweise von dem Cyclo-Olefin-Polymer Zeonex. Unter "bewegbar gelagert" soll hierbei insbesondere ein Verschieben und besonders vorteilhaft ein Drehen des Prismas um eine Drehachse verstanden werden.

Durch die erfindungsgemäße Ausgestaltung der Zieloptikvorrichtung kann eine insbesondere platzsparende Justiereinheit erreicht werden, die ein einfaches Justieren mit einer hohen Justiergenauigkeit durch Bewegen der Prismen, insbesondere ein Drehen ermöglicht, so dass Justagefehler zumindest reduziert oder zumindest teilweise vermieden werden können.

Weiterhin wird vorgeschlagen, dass die Zielopfikvorrichtung einen Strahlengang für die Abbildung des Messobjekts aufweist und die Justiereinheit in diesem Strahlengang zumindest teilweise angeordnet ist. Hierbei soll unter einem "Strahl lengang für die Abbildung des Messobjekts" insbesondere der Lauf von Lichtstrahlen, die von dem Messobjekt ausgesandt und/oder reflektiert werden, durch die Zieloptikvorrichtung verstanden werden. Es kann hierbei das Abbild des Messobjekts vorteilhaft an die konstante und/oder fixe Referenzmarkierung angepasst werden und somit können insbesondere Fertigungstoleranzen und/oder Einbautoleranzen von optischen Elementen der Zieloptikvorrichtung, wie beispielsweise einem Hohlspiegel und/oder einem Strahlteiler, zur Ablenkung eines Referenzstrahls zur Erzeugung der Referenzmarkierung ausgeglichen werden.

Es wird zudem vorgeschlagen, dass das erste Prisma und das zweite Prisma während der Justierung relativ zueinander bewegbar gelagert sind. Es kann hierbei eine besonders präzise und insbesondere kostengünstige Justierung und/oder Abstimmung des Abbilds mit der Referenzmarkierung erreicht werden. Grundsätzlich ist es jedoch auch denkbar, dass zur Justierung die beiden Prismen gemeinsam um einen gleichen Winkel bezüglich einer Drehachse drehbar sind, so dass eine relative Position der beiden Prismen zueinander gleich bleibt und eine Bewegung lediglich bezüglich einer internen Achse der Zieloptikeinheit erfolgt.

In einer weiteren Ausgestaltung der Erfindung wird vorgeschlagen, dass das erste Prisma und/oder das zweite Prisma von einem Keilprisma gebildet sind. In diesem Zusammenhang soll unter einem "Keilprisma" insbesondere ein Prisma verstanden werden, das eine keilartige Form mit insbesondere zwei Seitenflächen, die unter einem spitzen Winkel zusammenlaufen, aufweist. Vorzugsweise ist zumindest eines der beiden Keilprismen scheibenartig mit einer runden Querschnittsfläche ausgebildet, wobei eine Dicke und/oder eine Höhe der Prismenscheibe keilförmig ausgebildet ist. Es kann hierbei der Lichtstrahl vorteilhaft kreisförmig in eine Richtung um den Winkel δ abgelenkt werden, wobei der Winkel δ wie folgt bestimmt werden kann: δ=(n-1) α. Hierbei stellt n den Brechungsindex des Keilprismas dar und α den Keilwinkel des Keilprismas, d.h. den Winkel des Keilprismas, den beide Keilflächen bzw. Seitenflächen zueinander bilden. Vorzugsweise weisen hierbei das erste Prisma und/oder das zweite Prisma einen Keilwinkel wenigstens in einem Bereich zwischen 0° und 90° und besonders vorteilhaft wenigstens in einem Bereich zwischen 0° und 45° und besonders bevorzugt wenigstens in einem Bereich zwischen 0° und 10° auf.

Des Weiteren wird vorgeschlagen, dass das erste Prisma einen Keilwinkel aufweist, der im Wesentlichen gleich dem Keilwinkel des zweiten Prismas ist, wodurch konstruktiv einfach eine Ablenkung in zumindest zwei Richtungen erreicht werden kann. Da ein Strahl an jedem Keilprisma in beide Richtungen ablenkbar ist, bestimmt sich der maximale Ablenkwinkel δ hierbei mit δ=4(n-1)α. In diesem Zusammenhang soll unter "im Wesentlichen gleich" insbesondere verstanden werden, dass sich der Keilwinkel des ersten Prismas und der Keilwinkel des zweiten Prismas um maximal 10 %, besonders vorteilhaft um maximal 5 % und besonders bevorzugt um maximal 2 % unterscheiden.

Es wird ferner vorgeschlagen, dass die Justiereinheit zumindest ein Fixiermittel aufweist, das zu einer Fixierung des ersten Prismas und/oder des zweiten Prismas nach dem Justieren vorgesehen ist, wodurch das erste Prisma und/oder das zweite Prisma besonders vorteilhaft in einer justierten und/oder angepassten Position fixiert und/oder befestigt werden kann und ein unerwünschtes Bewegen des ersten und/oder des zweiten Prismas aus der justierten Position heraus verhindert werden kann. Das Fixiermittel kann hierbei von einem stoffschlüssigen Fixiermittel, wie beispielsweise einem Klebemittel, und/oder einem mechanischen Fixiermittel usw. gebildet sein.

Des Weiteren geht die Erfindung aus von einem Laserentfernungsmessgerät mit einer Zieloptikvorrichtung. Es kann hierbei eine besonders platzsparende und insbesondere kompakte Ausgestaltung des Laserentfernungsmessgeräts erreicht werden und damit eine Bedienerfreundlichkeit des Laserentfernungsmessgeräts erhöht werden.

Zudem geht die Erfindung aus von einem Justierverfahren für eine Zieloptikvorrichtung, die zu einem Anvisieren eines Messobjekts vorgesehen ist und die eine Referenzmarkierung und eine Justiereinheit mit zumindest einem Lagermittel aufweist, wobei die Justiereinheit zumindest ein erstes Prisma aufweist, das während einer Justierung einer Abbildung des Messobjekts mit der Referenzmarkierung bewegt wird. Es kann ein einfaches Justieren mit einer hohen Justiergenauigkeit durch Bewegen des Prismas, insbesondere Drehen, ermöglicht werden, so dass Justagefehler zumindest reduziert oder zumindest teilweise vermieden werden können. Besonders vorteilhaft kann dies erreicht werden, wenn die Justiereinheit zumindest ein zweites Prisma aufweist, das zur Justierung der Abbildung des Messobjekts mit der Referenzmarkierung bewegt wird. Vorzugsweise wird hierbei das erste Prisma und/oder das zweite Prisma mittels des zumindest einen Lagermittels bewegbar gelagert. Besonders vorteilhaft sind das erste Prisma und/oder das zweite Prisma von einem Keilprisma gebildet.

Weiterhin wird vorgeschlagen, dass das erste Prisma und das zweite Prisma während der Justierung relativ zueinander bewegt werden. Es kann hierbei eine besonders präzise und insbesondere kostengünstige Justierung und/oder Abstimmung des Abbilds mit der Referenzmarkierung erreicht werden.

Besonders vorteilhaft wird das erste Prisma und/oder das zweite Prisma nach der Justierung fixiert, wodurch das erste Prisma und/oder das zweite Prisma besonders vorteilhaft in einer justierten und/oder angepassten Position fixiert und/oder befestigt werden kann und ein unerwünschtes Bewegen aus der justierten Position heraus verhindert werden kann. Vorteilhafterweise erfolgt eine Justierung während einer Produktion der Zieloptikvorrichtung, so dass ein Bewegen der Prismen in einem Messbetrieb, beispielsweise eines Laserentfernungsmessgeräts, verhindert ist und die Prismen ihre justierte Position beibehalten.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: ein Laserentfernungsmessgerät mit einer Zieloptikvorrichtung in einer schematischen Darstellung,
- Fig. 2: die Zieloptikvorrichtung der Figur 1 in einer Detailansicht,
- Fig. 3: zwei Keilprismen der Zieloptikvorrichtung in einer schematischen Darstellung,
- Fig. 4: eine Abbildungsoptik der Zieloptikvorrichtung in einer Detailansicht und
- Fig. 5: eine zu Figur 2 alternative Ausgestaltung der Zieloptikvorrichtung in einer Detailansicht.

### Beschreibung der Ausführungsbeispiele

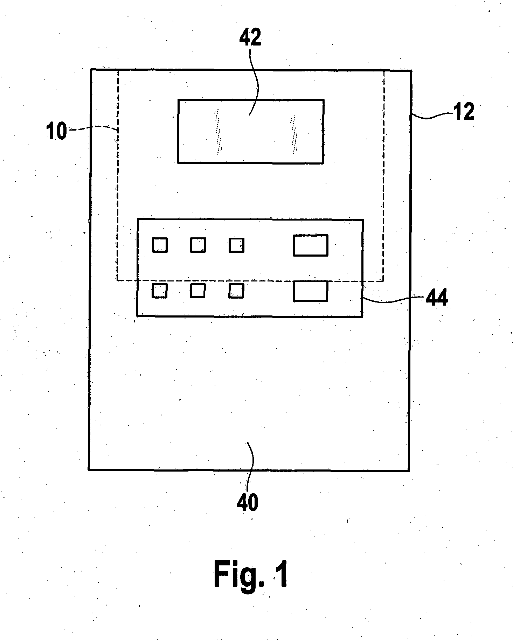

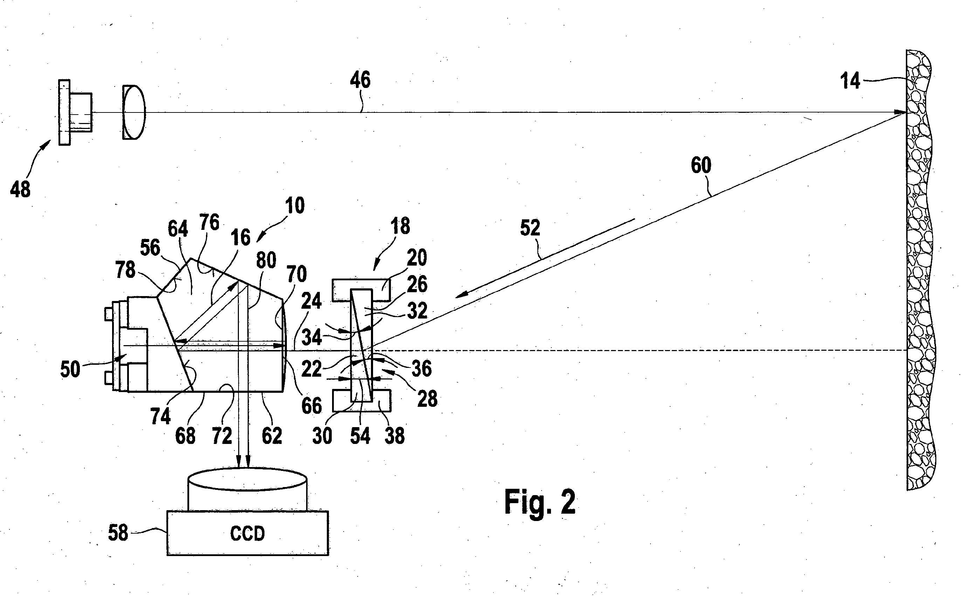

In Figur 1 ist ein Laserentfernungsmessgerät 12 dargestellt, das eine Zieloptikvorrichtung 10 aufweist, die von einem Gehäuse 40 des Laserentfernungsmessgeräts 12 umgeben ist. Des Weiteren weist das Laserentfernungsmessgerät 12 eine Anzeigeneinheit 42, die zu einer Ausgabe eines Messergebnisses im Betrieb des Laserentfernungsmessgeräts 12 vorgesehen ist, und eine Eingabeeinheit 44 mit mehreren Eingabetasten, die zu einer Bedienung des Laserentfernungsmessgeräts 12 durch den Bediener vorgesehen ist, auf. Das Laserentfernungsmessgerät 12 umfasst ferner eine Lasererzeugungseinheit 48, die zu einem Generieren eines Laserstrahls 46 für einen Messbetrieb des Laserentfernungsmessgeräts 12 vorgesehen ist (Figur 2). In dem Messbetrieb wird der Laserstrahl 46 auf ein anvisiertes Messobjekt 14 gerichtet und anhand eines von dem Messobjekt 14 reflektierten und von dem Laserentfernungsmessgerät 12 empfangenen Strahls wird eine Entfernung zwischen dem Laserentfernungsmessgerät 12 und dem Messobjekt 14 bestimmt.

Die Zieloptikvorrichtung 10 des Laserentfernungsmessgeräts 12 ist in Figur 2 näher dargestellt. Die Zieloptikvorrichtung 10 ist zu einem Anvisieren des Messobjekts 14 vorgesehen und weist eine Referenzmarkierung 16 und eine Justiereinheit 18 auf. Die Referenzmarkierung 16 ist von einem sichtbaren bzw. farbigen, von einem Laserstrahl gebildeten Referenzstrahl gebildet, der unabhängig zu dem Laserstrahl 46 erzeugt wird. Hierzu weist die Zieloptikvorrichtung 10 eine zu der Lasererzeugungseinheit 48 separat ausgebildete Einheit 50 zur Erzeugung der Referenzmarkierung 16 auf. Die Einheit zur Erzeugung 50 der Referenzmarkierung 16 weist eine Laserquelle auf, die in einem sichtbaren Wellenlängenbereich einen Laserstrahl erzeugt und aussendet, der als Referenzmarkierung 16 und/oder Zielmarke zur Justierung der Zieloptikvorrichtung 10 vorgesehen ist. Alternativ hierzu ist es zudem denkbar, dass die Einheit 50 zur Erzeugung der Referenzmarkierung 16 anstatt einer Laserquelle eine Leuchtdiode aufweist und/oder eine weitere, dem Fachmann als sinnvoll erscheinende Lichtquelle zur Erzeugung der Referenzmarkierung 16.

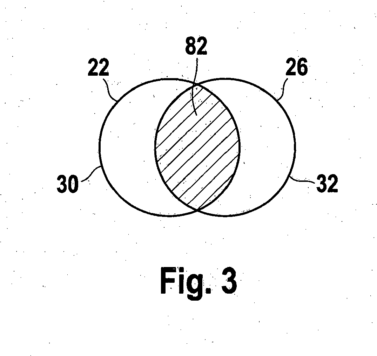

Die Justiereinheit 18 ist zu einer Justierung einer Abbildung 24 des Messobjekts 14 mit der Referenzmarkierung 16 vorgesehen, wobei die Justierung während einer Produktion des Laserentfernungsmessgeräts 12 erfolgt, so dass im Betrieb ein bereits justiertes Laserentfernungsmessgerät 12 zur Verfügung steht. Die Justiereinheit 18 weist hierzu zumindest ein erstes Prisma 22, ein zweites Prisma 26 und zumindest ein Lagermittel 20 auf. Mittels des Lagermittels 20 sind das erste Prisma 22 und das zweite Prisma 26 zu einer Justierung einer Abbildung 24 des Messobjekts 14 mit der Referenzmarkierung 16 bewegbar gelagert. Das Lagermittel 20 ist hierbei von einem mechanischen Lagermittel 20 gebildet. In einer alternative Ausgestaltung der Erfindung ist zudem denkbar, dass die Justiereinheit 18 zwei voneinander unabhängige Lagermittel 20 aufweist. Das erste Prisma 22 und das zweite Prisma 26 sind jeweils von einem Keilprisma 30, 32 gebildet, die im Wesentlichen eine kreisrunde Scheibe umfassen, wobei eine Dicke 54 der Scheibe entlang eines Durchmessers der Scheibe keilförmig ausgebildet ist (Figuren 2 und 3). Das erste Keilprisma 30 und das zweite Keilprisma 32 weisen jeweils einen Keilwinkel 34, 36 auf, der wenigstens in einem Bereich zwischen 0° und 90°, besonders vorteilhaft wenigstens in einem Bereich zwischen 0° und 45° und besonders bevorzugt wenigstens in einem Bereich zwischen 0° und 10° angeordnet ist. Die Keilwinkel 34, 36 entsprechen jeweils einem von den scheibenartigen, runden Flächen eingeschlossenen Winkel der Keilprismen 34, 36. Das erste Keilprisma 30 weist dabei einen Keilwinkel 34 auf, der im Wesentlichen gleich einem Keilwinkel 36 des zweiten Keilprismas 32 ist.

Während einer Justierung der Abbildung 24 des Messobjekts 14, insbesondere eines Abbildungsstrahls, mit der Referenzmarkierung 16 sind die beiden Keilprismen 30, 32 drehbar mittels des Lagermittels 20 gelagert. Zudem sind das erste Keilprisma 30 und das zweite Keilprisma 32 während der Justierung relativ zueinander bewegbar, insbesondere drehbar mittels des Lagermittels 20 gelagert, so dass beide Keilprismen 30, 32 zur Justierung unabhängig voneinander gedreht werden können. Die Zieloptikvorrichtung 10 weist zudem einen Strahlengang 28 für die Abbildung 24 des Messobjekts 14 auf, wobei die Justiereinheit 18, insbesondere die beiden Keilprismen 30, 32 in diesem Strahlengang 28 angeordnet sind. Der Strahlengang 28 ist entlang einer Strahlrichtung 52 eines von dem Messobjekt 14 ausgesandten und/oder reflektierten Strahls innerhalb der Zieloptikvorrichtung 10 angeordnet. Die beiden Keilprismen 30, 32 sind zumindest teilweise entlang der Strahlrichtung 52 nacheinander angeordnet, so dass entlang der Strahlrichtung 52 eine Überlagerung 82 der beiden Keilprismen 30, 32 derfolgt, wobei die Überlagerung 82 einen Einstellbereich für die Justierung bildet (Figur 3).

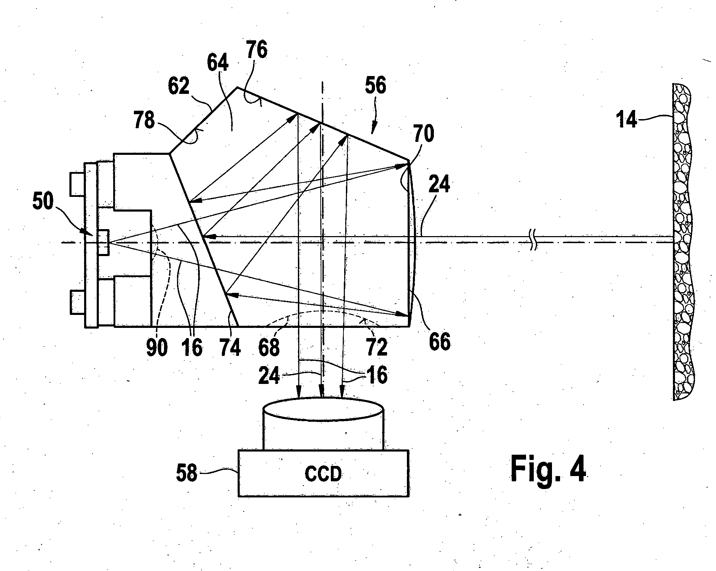

Des Weiteren weist die Zieloptikvorrichtung 10 eine Abbildungsoptik 56 auf, die zur Abbildung 24 des einfallenden, von dem Messobjekt 14 ausgehenden und/oder reflektierten Lichtstrahls und/oder Laserstrahls 60 auf ein Auge des Bedieners oder auf eine optische Erfassungseinheit 58, wie beispielsweise eine Kamera, insbesondere eine CCD-Kamera, vorgesehen ist (Figuren 2 und 4). Die Abbildungsoptik 56 ist entlang der Strahlrichtung 52 nach der Justiereinheit 18 angeordnet. Die Abbildungsoptik 56 ist von einem Pentaprisma 62 gebildet, das vorzugsweise von einem optischen Spritzgussbauteil gebildet ist. Das Pentaprisma 62 weist eine fünfseitige und/oder fünfeckige Querschnittsfläche 64 auf. Des Weiteren weist das Pentaprisma 62 ein Objektiv 66 in Form einer Sammellinse und ein Okular 68 in Form einer Zerstreuungslinse auf, die einstückig mit dem Pentaprisma ausgebildet sind. Eine optische Hauptebene 70 der Sammellinse und eine optische Hauptebene 72 der Zerstreuungslinse sind an unterschiedlichen, direkt nebeneinander angeordneten Lichtein- und/oder Lichtaustrittsflächen des Pentaprismas 62 angeordnet, wobei die beiden Hauptebenen 70, 72 einen Winkel von im Wesentlichen 90° einschließen. Zudem weist das Pentaprisma 62 zwei Spiegelflächen 74, 76 auf, die gegenüber dem Objektiv 66 und dem Okular 68 angeordnet sind, wobei die beiden Spiegelflächen 74, 76 durch eine weitere Fläche 78 voneinander getrennt angeordnet sind. Die beiden Spiegelflächen 74, 76 bilden zueinander einen Windel von im Wesentlichen 45° aus. Zudem sind die beiden Spiegelflächen 74, 76 bezüglich der optischen Hauptebenen 70, 72 des Objektivs 66 und des Okulars 68 geneigt angeordnet. Die Abbildungsoptik 56 ist derart angeordnet, dass das Objektiv 66 an einer der Justiereinheit 18 zugewandten Seite des Pentaprismas 62 angeordnet ist. Zudem kann nach der Einheit 50 zur Erzeugung der Referenzmarkierung 16 eine Linse 90 angeordnet sein, die zu einer Aufweitung des Strahlenbündels der Referenzmarkierung 16 vorgesehen ist, so dass eine für eine Justierung erforderliche Ausleuchtung der Abbildungsoptik 56 erreicht wird, wie dies in Figur 4 angedeutet ist.

Die Einheit 50 zur Erzeugung der Referenzmarkierung 16 ist auf einer der Justiereinheit 18 gegenüberliegenden Seite des Pentaprismas 62 angeordnet. Der von der Laserquelle ausgesandte Laserstrahl bzw. das von der Laserquelle ausgesandte Laserstrahlenbündel wird in die Abbildungsoptik 56 geleitet und an dem Objektiv 66, das zugleich als Hohlspiegel zur Reflexion der Referenzmarkierung 16 ausgebildet ist, reflektiert. In Figur 2 ist zur Vereinfachung der Darstellung nur ein Strahl der Referenzmarkierung 16 dargestellt. Über das Objektiv 66 gelangt ein Abbildungsstrahl 80 und/oder ein Strahlenbündel der Abbildung 24 des Messobjekts 14 über die Justiereinheit 18 in die Abbildungsoptik 56. Die Referenzmarkierung 16 und der Abbildungsstrahl 80 werden innerhalb des Pentaprismas 62 weitergeleitet und an beiden Spiegelflächen 74, 76 nacheinander reflektiert. Anschließend treten die Referenzmarkierung 16 und der Abbildungsstrahl 80 über das Okular 68 aus und werden zu der entlang eines Strahlenverlaufs nach dem Okular 68 als CCD-Kamera ausgebildeten Erfassungseinheit 58 geführt. An diese CCD-Kamera ist eine nicht näher dargestellte elektronische Auswerteeinheit angeschlossen, die einen Auftreffpunkt der Referenzmarkierung 16 mit einem Auftreffpunkt des Abbildungsstrahls 80 vergleicht.

Für eine Justierung müssen die Referenzmarkierung 16 und der Abbildungsstrahl 80 vorteilhaft überlagert sein oder mit geringen Abweichungen zueinander verlaufen. Hierzu werden die beiden Auftreffpunkte in der CCD-Kamera in der elektronischen Auswerteeinheit miteinander verglichen. Sind die Referenzmarkierung 16 und der Abbildungsstrahl 80 zu weit auseinander, werden daraufhin mittels des Lagermittels 20 in der Justiereinheit 18 die beiden Keilprismen 30, 32 solange gedreht, bis eine Überlagerung der Referenzmarkierung 16 mit dem Abbildungsstrahl 80 erfolgt oder der Abbildungsstrahl 80 innerhalb eines tolerierbaren Abstands zu der Referenzmarkierung 16 auf der CCD-Kamera auftrifft. Durch Drehen der beiden Keilprismen 30, 32 wird eine besonders exakte und feine Abstimmung des Abbildungsstrahls 80 mit der Referenzmarkierung 16 erreicht. Das Drehen der beiden Keilprismen 30, 32 mittels des Lagermittels 20 kann dabei zumindest teilweise automatisch über die elektronische Auswerteeinheit und/oder manuell erfolgen.

Sobald eine Justierung erfolgt ist und die beiden Keilprismen 30, 32 sich in einer justierten Position befinden, werden die beiden Keilprismen 30, 32 fixiert, so dass eine Bewegung der beiden Keilprismen 30, 32 aus ihrer justierten Position aus einem Messbetrieb heraus verhindert wird. Hierzu weist die Justiereinheit 18 ein Fixiermittel 38 auf. Das Fixiermittel 38 kann von einem Klebemittel und/oder von einem Blockiermittel des Lagermittels 20 und/oder weiteren, dem Fachmann als sinnvoll erscheinenden Mitteln gebildet sein. Das Fixiermittel 38 ist vorzugsweise zu einer dauerhaften Fixierung der beiden Keilprismen 30, 32 vorgesehen. Nach der Justierung der Zieloptikvorrichtung 10 und anschließender Fixierung der beiden Keilprismen 30, 32 erfolgt eine Endmontage des Laserentfernungsmessgeräts 12.

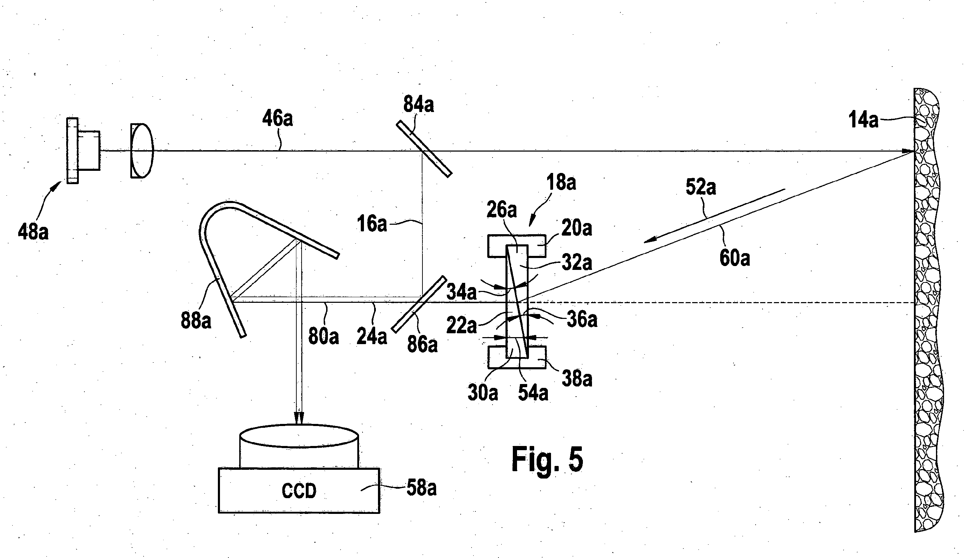

In Figur 5 ist eine zu den Figuren 2 und 3 alternative Ausgestaltung einer Zieloptikvorrichtung 10 dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele ist den Bezugszeichen des nachfolgenden Ausführungsbeispiels der Buchstabe a hinzugefügt. Die nachfolgende Beschreibung beschränkt sich im Wesentlichen auf die Unterschiede zu dem Ausführungsbeispiel in den Figuren 2 und 3, wobei bezüglich gleich bleibender Bauteile, Merkmale und Funktionen auf die Beschreibung des Ausführungsbeispiels in den Figuren 2 und 3 verwiesen werden kann.

Die Zieloptikvorrichtung 10a weist eine Referenzmarkierung 16a und eine Justiereinheit 18a auf. Die Referenzmarkierung 16a ist von einem Laserstrahl 46a gebildet, der durch eine Lasererzeugungseinheit 48a erzeugt wird. Mittels eines Strahlteilers 84a wird die Referenzmarkierung 16a von dem Laserstrahl 46 abgezweigt. Von diesem Strahlteiler 84a wird die Referenzmarkierung 16a auf einen weiteren Strahlteiler 86a gelenkt und von diesem zusammen mit einem Abbildungsstrahl 80a des Messobjekts 14a auf einen Umlenkspiegel 88a gelenkt. Der Umlenkspiegel 88a weist die Funktion der beiden Spiegelflächen des Pentaprismas aus Figur 2 auf, wobei die Referenzmarkierung 16a und der Abbildungsstrahl 80a in dem Umlenkspiegel 88a zweimal umgelenkt und/oder reflektiert werden und anschließend zu einem Betrachter und/oder einer von einer CCD-Kamera gebildeten Erfassungseinheit 58a geführt werden. Die Justiereinheit 18a weist analog zur Beschreibung zu Figur 2 ein erstes Prisma 22a und ein zweites Prisma 26a auf, die jeweils von einem Keilprisma 30a, 32a gebildet sind und die mittels eines Lagermittels 20a der Justiereinheit 18a bewegbar gelagert sind. Eine Justierung mittels der Justiereinheit 18a erfolgt analog zu der Beschreibung in Figur 2. Nach einer erfolgreichen Justierung werden die beiden Keilprismen 30a, 32a analog zur Beschreibung zu Figur 2 fixiert.

## Patentansprüche

1. Zieloptikvorrichtung, insbesondere für ein Laserentfernungsmessgerät (10; 10a), die zu einem Anvisieren eines Messobjekts (14; 14a) vorgesehen ist und die eine Referenzmarkierung (16; 16a) und eine Justiereinheit (18; 18a) mit zumindest einem Lagermittel (20; 20a), sowie eine Abbildungsoptik (56, 88a) zur Abbildung (24,24a) eines einfallenden, von dem Messobjekt (14,14a) ausgehenden und/oder reflektierten Lichtstrahls auf ein Auge des Bedieners oder auf eine optische Erfassungseinheit (58, 58a) aufweist, **dadurch gekennzeichnet, dass** die Justiereinheit (18; 18a) zumindest ein erstes Prisma (22; 22a) aufweist, welches zum Zweck der Justierung der Abbildung (24; 24a) des Messobjekts (14; 14a) mit der Referenzmarkierung (16; 16a) mittels des Lagermittels (20; 20a) bewegbar gelagert ist, wobei die Justiereinheit (18; 18a) zumindest ein zweites Prisma (26; 26a) aufweist, welches zum Zweck der Justierung der Abbildung (24; 24a) des Messobjekts (14; 14a) mit der Referenzmarkierung (16; 16a) mittels des Lagermittels (20; 20a) bewegbar gelagert ist, wobei erste Prisma (22; 22a) und das zweite Prisma (26; 26a) während der Justierung relativ zueinander bewegbar sind, und die Justiereinheit (18; 18a) zumindest ein Fixiermittel (38; 38a) aufweist, das zu einer Fixierung des ersten Prismas (22; 22a) und/oder des zweiten Prismas (26; 26a) nach dem Justieren vorgesehen ist.

2. Zieloptikvorrichtung nach Anspruch 1, **gekennzeichnet durch** einen Strahlengang (28; 28a) für die Abbildung (24; 24a) des Messobjekts (14; 14a), wobei die Justiereinheit (18; 18a) in diesem Strahlengang (28; 28a) zumindest teilweise angeordnet ist.

3. Zieloptikvorrichtung zumindest nach Anspruch 1, **dadurch gekennzeichnet, dass** das erste Prisma (22; 22a) und/oder das zweite Prisma (26; 26a) von einem Keilprisma (30, 32; 30a, 32a) gebildet ist.

4. Zieloptikvorrichtung zumindest nach Anspruch 1, **dadurch gekennzeichnet, dass** das erste Prisma (22; 22a) und/oder das zweite Prisma (26; 26a) einen Keilwinkel (34, 36; 34a, 36a) wenigstens in einem Bereich zwischen 0° und 90° aufweist.

5. Zieloptikvorrichtung nach Anspruch 4, **dadurch gekennzeichnet, dass** das erste Prisma (22; 22a) und/oder das zweite Prisma (26; 26a) einen Keilwinkel (34, 36; 34a, 36a) wenigstens in einem Bereich zwischen 0° und 10° aufweist.

6. Zieloptikvorrichtung zumindest nach Anspruch 1, **dadurch gekennzeichnet, dass** das erste Prisma (22; 22a) einen Keilwinkel (34; 34a) aufweist, der im Wesentlichen gleich dem Keilwinkel (36; 36a) des zweiten Prismas (26; 26a) ist.

7. Laserentfernungsmessgerät (12; 12a) mit einer Zieloptikvorrichtung (10; 10a) nach einem der vorhergehenden Ansprüche.

8. Justierverfahren für eine Zieloptikvorrichtung (10; 10a) nach einem der Ansprüche 1 bis 6, die zu einem Anvisieren eines Messobjekts (14; 14a) vorgesehen ist und die eine Referenzmarkierung (16; 16a) und eine Justiereinheit (18; 18a) mit zumindest einem Lagermittel (20; 20a) aufweist, **dadurch gekennzeichnet, dass** die Justiereinheit (18; 18a) zumindest ein erstes Prisma (22; 22a) aufweist, welches zum Zweck der Justierung der Abbildung (24; 24a) des Messobjekts (14; 14a) mit der Referenzmarkierung (16; 16a) bewegt wird, wobei die Justiereinheit (18; 18a) zumindest ein zweites Prisma (26; 26a) aufweist, welches zum Zweck der Justierung der Abbildung (24; 24a) des Messobjekts (14; 14a) mit der Referenzmarkierung (16; 16a) mittels des Lagermittels (20; 20a) bewegt wird, wobei erste Prisma (22; 22a) und das zweite Prisma (26; 26a) während der Justierung relativ zueinander bewegt werden, und das erste Prisma (22; 22a) und/oder das zweite Prisma (26; 26a) nach der Justierung fixiert werden.

## Claims

1. Aiming optical device, in particular for a laser distance-measuring instrument (10; 10a) which is provided for sighting a measurement object (14; 14a) and which has a reference mark (16; 16a) and an adjusting unit (18; 18a) with at least one bearing means (20; 20a), and imaging optics (56, 88a) for imaging (24, 24a) an incident light beam, emanating from and/or reflected by the measurement object (14, 14a), onto an eye of the user or onto an optical detection unit (58, 58a), **characterized in that** the adjusting unit (18; 18a) has at least one first prism (22; 22a) which is movably mounted to adjust the image (24; 24a) of the measurement object (14; 14a) with the reference mark (16; 16a) by means of the bearing means (20; 20a), the adjusting unit (18; 18a) having at least one second prism (26; 26a) which is movably mounted to adjust the image (24; 24a) of the measurement object (14; 14a) with the reference mark (16; 16a) by means of the bearing means (20; 20a), the first prism (22; 22a) and the second prism (26; 26a) being movable relative to one another during the adjustment, and the adjusting unit (18; 18a) having at least one fixing means (38; 38a) which is provided to fix the first prism (22; 22a) and/or the second prism (26; 26a) after the adjustment.

2. Aiming optical device according to Claim 1, **characterized by** a beam path (28; 28a) for the image (24; 24a) of the measurement object (14; 14a), the adjusting unit (18; 18a) being arranged at least partially in said beam path (28; 28a).

3. Aiming optical device at least according to Claim 1, **characterized in that** the first prism (22; 22a) and/or the second prism (26; 26a) are/is formed by a wedge prism (30, 32; 30a, 32a).

4. Aiming optical device at least according to Claim 1, **characterized in that** the first prism (22; 22a) and/or the second prism (26; 26a) has a wedge angle (34, 36; 34a, 36a) at least in a range between 0° and 90°.

5. Aiming optical device according to Claim 4, **characterized in that** the first prism (22; 22a) and/or the second prism (26; 26a) has a wedge angle (34, 36; 34a, 36a) at least in a range between 0° and 10°.

6. Aiming optical device at least according to Claim 1, **characterized in that** the first prism (22; 22a) has a wedge angle (34; 34a) which is substantially equal to the wedge angle (36; 36a) of the second prism (26; 26a).

7. Laser distance-measuring instrument (12; 12a) with an aiming optical device (10; 10a) according to one of the preceding claims.

8. Adjusting method for an aiming optical device (10; 10a) according to one of Claims 1 to 6, which is provided for sighting a measurement object (14; 14a) and which has a reference mark (16; 16a) and an adjusting unit (18; 18a) with at least one bearing means (20; 20a), **characterized in that** the adjusting unit (18; 18a) has at least one first prism (22; 22a) which is moved to adjust the image (24; 24a) of the measurement object (14; 14a) with the reference mark (16; 16a), the adjusting unit (18; 18a) having at least one second prism (26; 26a) which is moved to adjust the image (24; 24a) of the measurement object (14; 14a) with the reference mark (16; 16a) by means of the bearing means (20; 20a), the first prism (22; 22a) and the second prism (26; 26a) being moved relative to one another during the adjustment, and the first prism (22; 22a) and/or the second prism (26; 26a) being fixed after the adjustment.

## Revendications

1. Système optique de visée, notamment pour un appareil de mesure de distance laser (10 ; 10a) prévu pour viser un objet mesuré (14 ; 14a) et comportant un marquage de référence (16 ; 16a) et une unité d'ajustement (18 ; 18a) avec au moins un moyen de roulement (20 ; 20a), ainsi qu'un système optique de représentation d'image (56, 88a) servant à la représentation d'image (24, 24a) d'un faisceau lumineux incident réfléchissant un objet mesuré (14, 14a) et/ou partant de lui sur un oeil de l'utilisateur ou sur une unité d'enregistrement (58, 58a) optique, **caractérisé en ce que** l'unité d'ajustement (18 ; 18a) comporte au moins un premier prisme (22 ; 22a) disposé de façon mobile afin de réaliser l'ajustement de la représentation d'image (24 ; 24a) de l'objet mesuré (14 ; 14a) avec le marquage de référence (16 ; 16a) à l'aide du moyen de roulement (20 ; 20a), l'unité d'ajustement (18 ; 18a) comportant au moins un deuxième prisme (26 ; 26a) disposé de façon mobile afin de réaliser l'ajustement de la représentation d'image (24 ; 24a) de l'objet mesuré (14 ; 14a) avec le marquage de référence (16 ; 16a) à l'aide du moyen de roulement (20 ; 20a), le premier prisme (22 ; 22a) et le deuxième prisme (26 ; 26a) pouvant être déplacés l'un par rapport à l'autre pendant l'ajustement et l'unité d'ajustement (18 ; 18a) comportant au moins un moyen de fixation (38 ; 38a) prévu pour une fixation du premier prisme (22 ; 22a) et/ou du deuxième prisme (26 ; 26a) après un ajustement.

2. Système optique de visée selon la revendication 1, **caractérisé par** la présence d'un trajet de faisceau (28 ; 28a) pour la représentation d'image (24 ; 24a) de l'objet mesuré (14 ; 14a), l'unité d'ajustement (18 ; 18a) étant disposée au moins en partie dans ce trajet de faisceau (28 ; 28a).

3. Système optique de visée au moins selon la revendication 1, **caractérisé en ce que** le premier prisme (22 ; 22a) et/ou le deuxième prisme (26 ; 26a) sont formés d'un prisme en coin (30, 32 ; 30a, 32a).

4. Système optique de visée au moins selon la revendication 1, **caractérisé en ce que** le premier prisme (22 ; 22a) et/ou le deuxième prisme (26 ; 26a) comportent un angle de coin (34, 36 ; 34a, 36a) au moins dans une plage comprise entre 0° et 90°.

5. Système optique de visée selon la revendication 4, **caractérisé en ce que** le premier prisme (22 ; 22a) et/ou le deuxième prisme (26 ; 26a) comportent un angle de coin (34, 36 ; 34a, 36a) au moins dans une plage comprise entre 0° et 10°.

6. Système optique de visée au moins selon la revendication 1, **caractérisé en ce que** le premier prisme (22 ; 22a) comporte un angle de coin (34 ; 34a) pour l'essentiel égal à l'angle de coin (36 ; 36a) du deuxième prisme (26 ; 26a).

7. Appareil de mesure de distance laser (12 ; 12a) avec un système optique de visée (10 ; 10a) selon l'une quelconque des revendications précédentes.

8. Procédé d'ajustement pour un système optique de visée (10 ; 10a) selon l'une quelconque des revendications 1 à 6, prévu pour viser un objet mesuré (14 ; 14a) comportant un marquage de référence (16 ; 16a) et une unité d'ajustement (18 ; 18a) avec au moins un moyen de roulement (20 ; 20a), **caractérisé en ce que** l'unité d'ajustement (18 ; 18a) comporte au moins un premier prisme (22 ; 22a) déplacé afin de réaliser l'ajustement de la représentation d'image (24 ; 24a) de l'objet mesuré (14 ; 14a) avec le marquage de référence (16 ; 16a), l'unité d'ajustement (18 ; 18a) comportant au moins un deuxième prisme (26 ; 26a) déplacé afin de réaliser l'ajustement de la représentation d'image (24 ; 24a) de l'objet mesuré (14 ; 14a) avec le marquage de référence (16 ; 16a) à l'aide du moyen de roulement (20 ; 20a), le premier prisme (22 ; 22a) et le deuxième prisme (26 ; 26a) étant déplacés l'un par rapport à l'autre pendant l'ajustement et le premier prisme (22 ; 22a) et/ou le deuxième prisme (26 ; 26a) étant fixés après un ajustement.
